Europäisches Patentamt

European Patent Office

Office européen des brevets

(11) Veröffentlichungsnummer: **0 379 681**
**A2**

## (12) EUROPÄISCHE PATENTANMELDUNG

(21) Anmeldenummer: **89122211.9**

(22) Anmeldetag: **01.12.89**

(51) Int. Cl.5: **F16N 3/12**

(30) Priorität: **24.01.89 DE 3901968**

(43) Veröffentlichungstag der Anmeldung:
**01.08.90 Patentblatt 90/31**

(84) Benannte Vertragsstaaten:
**ES FR GB IT SE**

(71) Anmelder: **MATO Maschinen- und Metallwarenfabrik Curt Matthaei GmbH & Co KG**
**Bieberer Strasse 215-217**
**D-6050 Offenbach am Main(DE)**

(72) Erfinder: **Der Erfinder hat auf seine Nennung verzichtet**

(74) Vertreter: **Schieferdecker, Lutz, Dipl.-Ing.**
**Herrnstrasse 37**
**D-6050 Offenbach am Main(DE)**

(54) Fettpresse.

(57) Die Erfindung betrifft eine Fettpresse und insbesondere eine Handhebel-Fettpresse mit einem einen Niederdruckkolben aufweisenden Fettbehälter sowie mit einem Hochdruckkolben in einer Bohrung eines Hochdruckteiles, der an einem auf den Fettbehälter aufschraubbaren Deckel angeordnet ist, über eine Bohrung mit dem Inneren des Fettbehälters in Verbindung steht und einen Auslaßstutzen mit einer Bohrung und einem Ventil aufweist, und wobei ferner ein Handhebel zum Verschieben des Hochdruckkolbens vorgesehen ist.

Der Kern der Erfindung besteht darin, daß ein zweites Ventil sowie eine Anzeigeeinrichtung an die Bohrung mit dem Hochdruckkolben angeschlossen sind und daß das zweite Ventil zur Steuerung der Anzeigeeinrichtung dient.

Fig. 2

## Fettpresse

Die Erfindung betrifft eine Fettpresse und insbesondere eine Handhebel-Fettpresse mit einem einen Niederdruckkolben aufweisenden Fettbehälter sowie mit einem Hochdruckkolben in einer Bohrung eines Hochdruckteiles, der an einem auf den Fettbehälter aufschraubbaren Deckel angeordnet ist, über eine Bohrung mit dem Inneren des Fettbehälters in Verbindung steht und einen Auslaßstutzen mit einer Bohrung und einem Ventil aufweist, und wobei ferner ein Handhebel zum Verschieben des Hochdruckkolbens vorgesehen ist.

Handhebel-Fettpressen der genannten Art sind in verschiedensten Ausführungsformen bekannt. Obwohl die Druckerzeugung mit Hilfe eines Handhebels erfolgt, ist es möglich, sehr hohe Drücke zu erzielen. Druckspitzen können dabei in einer Größenordnung bis zu 800 bar bis 900 bar liegen und zu Maschinenschäden oder Unfällen führen, wenn z.B. Schmierleitungen oder dgl. wegen der hohen Drücke platzen.

Der Erfindung liegt daher die Aufgabe zugrunde, Maßnahmen vorzusehen, mit deren Hilfe es sicher und zuverlässig möglich ist, daß mit einer Handhebel-Fettpresse arbeitende Personen jeweils auftretende Druckspitzen rechtzeitig vorher erkennen und sodann vermeiden können.

Zur Lösung dieser Aufgabe sieht die Erfindung vor, daß ein zweites Ventil sowie eine Anzeigeeinrichtung an die Bohrung mit dem Hochdruckkolben angeschlossen sind und daß das zweite Ventil zur Steuerung der Anzeigeeinrichtung dient.

Das zweite Ventil ist ein Überdruckventil und öffnet bei Überschreiten eines eingestellten Druckes. Dadurch gelangt Schmiermittel in den Bereich der Anzeigeeinrichtung und löst ein Signal aus, welches der Bedienungsperson das Erreichen eines bestimmten Druckes anzeigt. Die Bedienungsperson kann sodann die Arbeit unterbrechen, ohne daß eine gefährliche Situation entsteht.

In Weiterbildung der Erfindung ist ferner vorgesehen, daß auch noch ein drittes Ventil in einem Strömungsweg zwischen einer Kammer hinter dem zweiten Ventil und dem Inneren des Fettbehälters vorgesehen ist. Durch dieses dritte Ventil kann die zum Auslösen der Anzeigeeinrichtung dienende Substanz wieder in den Fettbehälter zurückfließen, wenn entweder die Bedienungsperson trotz einer Warnung den Druck erhöht oder die Anzeigeeinrichtung nach einem abgegebenen Signal wieder funktionsbereit gemacht wird.

Als Anzeigeeinrichtung ist vorzugsweise hinter dem zweiten Ventil ein frei bewegbarer Signalstift in einer Kammer geführt und tritt teilweise bei Erreichen des eingestellten Überdruckes aus einem Gehäuse heraus. Anstelle dieser optischen Signalanzeige können aber auch elektrisch unterstützte Signale oder akustische Signale ausgelöst werden.

Weitere Merkmale der Erfindung gehen aus der Beschreibung und den Ansprüchen im Zusammenhang mit der Zeichnung hervor.

Die Erfindung wird nachstehend anhand von Ausführungsbeispielen, die in der Zeichnung dargestellt sind, näher beschrieben. Dabei zeigen:

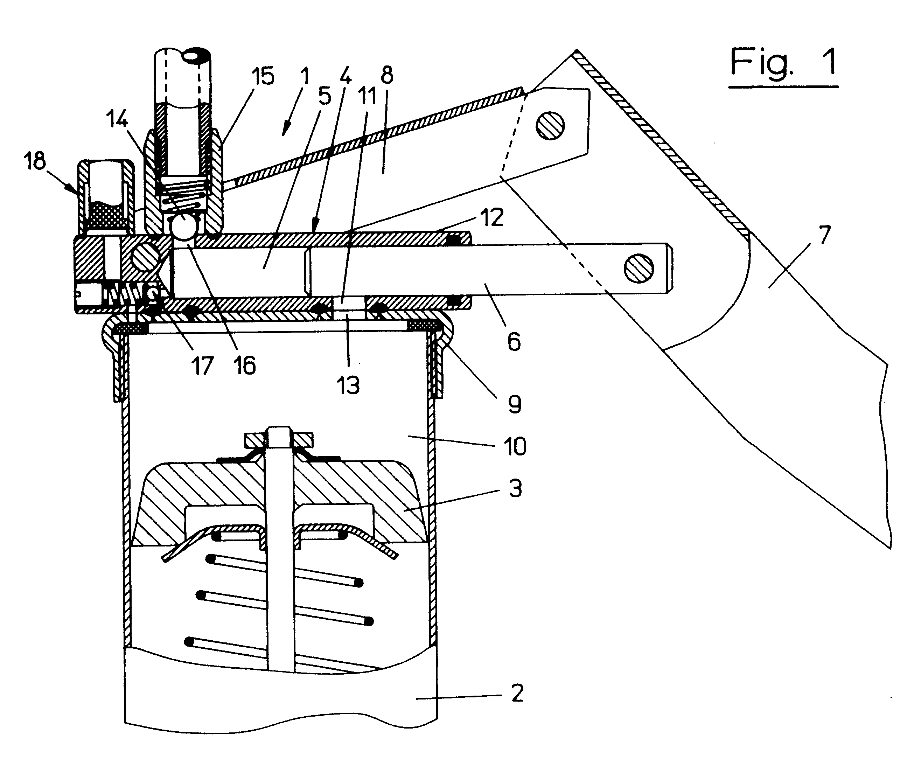

Fig. 1: eine teilweise geschnittene sowie abgebrochene Ansicht einer Handhebel-Fettpresse;

Fig. 2: eine Einzelheit aus Figur 2 in größerem Maßstab und

Fig. 3: eine Einzelheit wie in Fig. 2 von einer abgewandelten Ausführungsform.

Eine Fettpresse bzw. Handhebel-Fettpresse 1 umfaßt einen Fettbehälter 2 mit einem Niederdruckkolben 3 und einem Hochdruckteil 4, der eine Bohrung 5 für einen Hochdruckkolben 6 aufweist. Der Hochdruckkolben 6 ist mit Hilfe eines Handhebels 7 axial verschiebbar, wobei der Handhebel 7 am Hochdruckkolben 6 und einer Lasche 8 angelenkt ist. Der Hochdruckteil 4 ist ferner an einem aus dem Fettbehälter 2 aufschraubbaren Deckel 9 angeordnet und seine Bohrung 5 steht mit dem Inneren 10 des Fettbehälters 2 über eine Öffnung 11 im Gehäuse 12 des Hochdruckteiles 4 und eine deckungsgleiche Öffnung 13 im Deckel 9 in Verbindung.

Der Hochdruckteil 4 weist ferner einen mit einem federbelasteten Rückschlag- bzw. Überdruckventil 14 verschließbaren Auslaßstutzen 15 auf, in den das Fett oder Schmiermittel durch eine Bohrung 16 im Gehäuse 12 gelangt.

An die Bohrung 5 mit dem Hochdruckkolben 6 sind schließlich noch ein zweites Ventil 17 sowie eine Anzeigeeinrichtung 18 angeschlossen, wobei das zweite Ventil 17 zur Steuerung der Anzeigeeinrichtung 18 dient.

Das zweite Ventil 17 ist ein einstellbares Überdruckventil und umfaßt eine abgesetzte Bohrung 19 und eine federbelastete Ventilkugel 20. Von dem zweiten Ventil 17 führt ein Strömungsweg 21 zu einer Kammer 22, in der ein Signalstift 23 verschiebbar angeordnet ist. Die Kammer 22 weist eine Austrittsöffnung 24 auf, so daß der Signalstift 23 auch teilweise aus der Kammer 22 heraustreten kann. Dies geschieht dann, wenn sich die Kammer 22 nach Öffnen des Ventiles 17 mehr oder weniger mit Fett bzw. Schmiermittel füllt.

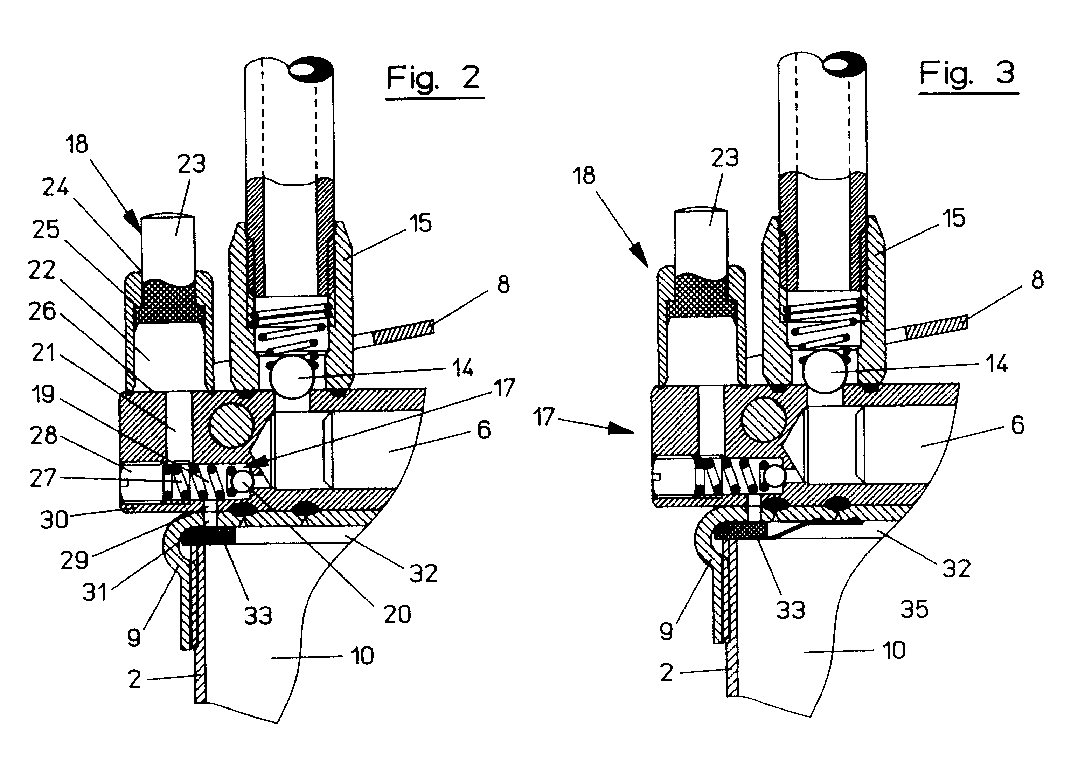

Der Signalstift 23 ist in seiner Längsrichtung zwischen zwei Anschlägen 25 und 26 frei bewegbar und zeigt beim Heraustreten aus der Kammer 22 einen Überdruck im Hochdruckteil 4 der Fettpresse an (Fig. 2, Fig. 3).

Mit Hilfe einer die Ventilfeder 27 beaufschlagenden Stellschraube 28 ist das als Überdruckventil wirkende Ventil 17 einstellbar.

Ein weiterer Strömungsweg führt von der Bohrung 19 des zweiten Ventiles 17 zum Inneren 10 des Fettbehälters 2. Dieser zweite Strömungsweg besteht aus einer Durchtrittsöffnung 29 in der Gehäusewand 30 des Ventiles 17 und aus einer deckungsgleichen Durchtrittsöffnung 31 im Deckel 9 und endet unmittelbar vor einer Dichtung 32 zwischen Deckel 9 und Fettbehälter 2.

Ein Stück 33 der Dichtung 32, und zwar das Stück 33, das unmittelbar vor der Druchtrittsöffnung 31 im Deckel 9 liegt, besitzt eine Doppelfunktion. Es dient einerseits als Dichtung und andererseits als ein drittes Ventil, welches im Strömungsweg zwischen dem zweiten Ventil 17 und dem Inneren 10 des Fettbehälters 2 vorgesehen ist.

Sobald in der Kammer 22 der Anzeigeeinrichtung 18 bzw. hinter dem Ventil 17 ein Überdruck gewisser Größe ent steht, wird die Dichtung 32 bzw. ihr Innenrand 34 vom Deckel 9 weggedrückt und gibt den Strömungsweg in das Innere 10 des Behälters 2 frei.

Die Dichtung 32 kann eine Flachdichtung sein und im Bereich der beiden Durchtrittsöffnungen 29, 31 zusätzlich von einer Feder 35, wie z.B. einer Blattfeder gemäß Fig. 3 beaufschlagt sein. Der Ventilöffnungsdruck an dem Stück 33 der Dichtung 32 ist dadurch reproduzierbar und unabhängig von der Elastizität ihres Werkstoffes und der Anpreßkraft des Fettbehälters 2 am Deckel 9.

## Ansprüche

1) Fettpresse, insbesondere Handhebel-Fettpresse mit einem einen Niederdruckkolben aufweisenden Fettbehälter sowie mit einem Hochdruckkolben in einer Bohrung eines Hochdruckteiles, der an einem auf den Fettbehälter aufschraubbaren Deckel angeordnet ist, über Öffnungen mit dem Inneren des Fettbehälters in Verbindung steht und einen Auslaßstutzen mit einer Bohrung und einem Ventil aufweist, und wobei ferner ein Handhebel zum Verschieben des Hochdruckkolbens vorgesehen und an einer Schwenklasche angeordnet ist, dadurch gekennzeichnet, daß ein zweites Ventil (17) sowie eine Anzeigeeinrichtung (18) an die Bohrung (5) mit dem Hochdruckkolben (6) angeschlossen sind und daß das zweite Ventil (17) zur Steuerung der Anzeigeeinrichtung (18) dient.

2) Fettpresse nach Anspruch 1, dadurch gekennzeichnet, daß das zweite Ventil (17) ein einstellbares Überdruckventil ist und eine Bohrung (19) und eine federbelastete Ventilkugel (20) umfaßt und daß von dem zweiten Ventil (17) ein Strömungsweg (21) zu einer Kammer (22) mit einer Austrittsöffnung (24) führt, längs der ein Signalstift (23) bewegbar ist.

3) Fettpresse nach Anspruch 1 und 2, dadurch gekennzeichnet, daß der Signalstift (23) in Längsrichtung zwischen zwei Anschlägen (25, 26) frei bewegbar ist.

4) Fettpresse nach Anspruch 1 - 3, dadurch gekennzeichnet, daß das zweite Ventil (17) mit Hilfe einer die Ventilfeder (27) beaufschlagenden Stellschraube (28) einstellbar ist.

5) Fettpresse nach Anspruch 1 - 3, dadurch gekennzeichnet, daß ein weiterer Strömungsweg von dem zweiten Ventil (17) zum Inneren (10) des Fettbehälters (2) hin vorgesehen ist und daß ein drittes Ventil im Strömungsweg zwischen dem zweiten Ventil (17) und dem Inneren (10) des Fettbehälters (2) angeordnet ist.

6) Fettpresse nach Anspruch 1 - 5, dadurch gekennzeichnet, daß der zweite Strömungsweg eine Durchtrittsöffnung (29) in der Gehäusewand (30) des Ventiles (17) und eine mit dieser fluchtende Durchtrittsöffnung (31) im Deckel (9) des Fettbehälters (2) umfaßt und unmittelbar vor einer Dichtung (32) zwischen Deckel (9) und Fettbehälter (2) endet.

7) Fettpresse nach Anspruch 1 - 6, dadurch gekennzeichnet, daß als drittes Ventil ein Stück (33) der Dichtung (32) zwischen Fettbehälter (2) und Deckel (9) dient.

8) Fettpresse nach Anspruch 1 - 7, dadurch gekennzeichnet, daß das als drittes Ventil dienende Stück (33) der Dichtung (32) von einer Feder (35) abgestützt ist.

9) Fettpresse nach Anspruch 1 - 8, dadurch gekennzeichnet, daß die Dichtung (32) eine Flachdichtung und die sie stützende Feder (35) eine Blattfeder ist.

Fig. 1

EP 0 379 681 A2

Fig. 2

18
24
25
22
26
21
19
28
27
30
29
31

23

15

8

14

17

6

32

20

33

9

2

10

Fig. 3

18
23

15

8

14

17

6

32

9

33

35

2

10

EP 0 379 681 A2